# FASCICULE DE BREVET EUROPEEN

(11) **EP 0 662 211 B1**
(45) Date de publication et mention de la délivrance du brevet: **10.02.1999**
(21) Numéro de dépôt: 94920363.2
(22) Date de dépôt: 20.07.1994
(51) Int. Cl.: G01B 11/02

(54) **PROCEDE ET ENSEMBLE DE MESURE POUR MESURER LES DIMENSIONS D'UN OBJET**
VERFAHREN UND VORRICHTUNG ZUM MESSEN DER DIMENSIONEN EINES OBJEKTS
METHOD AND APPARATUS FOR MEASURING THE DIMENSIONS OF AN OBJECT

(30) Priorité: 22.07.1993 CH 2210/93
(43) Date de publication de la demande: 12.07.1995
(73) Titulaire: PASSONI, Gianfranco, CH-1772 Grolley (CH)
(72) Inventeur: PASSONI, Gianfranco, CH-1772 Grolley (CH)
(74) Mandataire: Nithardt, Roland
(86) Numéro de dépôt international: CH9400151
(87) Numéro de publication internationale: WO9503525

(56) Documents cités:
- EP-A- 0 094 522
- EP-A- 0 324 561
- FR-A- 2 304 893
- US-A- 5 184 217
- TM TECHNISCHES MESSEN, vol.57, no.2, Février 1993, MüNCHEN, DE pages 71 - 77 T. PFEIFER, F.-J. CZUKA 'Messsystem zur 100%-Kontrolle von Stanzteilen im Produktionstakt'

## Description

La présente invention concerne un procédé pour mesurer les dimensions d'un objet et l'ensemble de mesure pour la mise en oeuvre de ce procédé.

Dans les machines de mesure optique traditionnelles, la caméra est munie d'un objectif comportant une grille CCD permettant une analyse électronique des contours des objets, ceci nécessitant le déplacement des objets sous l'objectif de la caméra. Ces objets, placés sur un support, risquent de se déplacer à cause des secousses dues aux mouvements du support. En outre, il est bien connu que les lentilles donnent des images déformées et pour cette raison les machines de mesure ne travaillent pas avec assez de précision. Toutes les lentilles optiques présentent une aberration chromatique et, de ce fait, le plan focal et la magnitude de l'image changent avec la longueur des ondes lumineuses. Jusqu'à présent on avait essayé de corriger ces défauts en corrigeant les lentilles. Mais même avec des lentilles ainsi corrigées on peut constater une légère aberration chromatique qui diminue la qualité de l'image et aboutit à des mesures inexactes.

Dans le procédé objet de la publication EP 0 324 561, qui concerne particulièrement un procédé de mesure d'objets textiles, l'objet à mesurer est posé bien précisément sur un support plat de façon que l'on puisse relever, à l'aide d'un dispositif comportant une caméra vidéo, une image pixel de cet objet dans un système de cordonnées horizontales et verticales. Les points de mesure sont ensuite identifiés par leurs coordonnées x, y et les distances entre ces points de mesure sont calculés à partir de leurs coordonnées. Pour la mesure, l'objet est éclairé en continu par des tubes fluorescents.

La présente invention vise à fournir une solution pour améliorer l'exactitude des mesures et ainsi de surmonter les désavantages des constructions connues en offrant un procédé et un ensemble dans lesquels les objets à mesurer peuvent être posés sur le support sans contrôle de leur position et dans lesquels les imprécisions de mesure dues au système optique sont éliminées.

Ce but est atteint par le procédé selon la présente invention dans lequel
a) on pose l'objet sur une table de mesure fixe,
b) on expose l'objet à des rayons lumineux,
c) on reconnaît la forme de l'objet en formant une image électronique dudit objet avec une caméra vidéo pour comparer sa forme avec des images mémorisées dans un ordinateur,
d) on choisit l'image mémorisée ayant la même forme que l'objet,
e) on détermine les axes principaux de l'objet pour déterminer les coordonnées liées à la place où se trouve l'objet et à la direction de ses axes principaux,
f) on examine le contour de l'objet au moyen d'un palpeur dont le parcours est commandé par l'image mémorisée, les axes principaux de cette image étant orientés pour correspondre avec les axes de l'objet sur la table fixe, et
g) on détermine les différences entre l'image mémorisée et l'image composée à l'aide de points capturés par le palpeur.

De préférence, l'on utilise une caméra vidéo pour examiner le contour de l'objet et cette caméra suit constamment ledit contour.

De façon avantageuse, la caméra vidéo est commandée par des points marqués dans l'image mémorisée et la source de lumière n'est enclenchée qu'à ces points marqués pour n'émettre que des éclairs de courte durée.

De préférence, la source de lumière émet un faisceau lumineux monochrome.

L'ensemble pour mettre en oeuvre le procédé selon l'invention, comprenant
une table de mesure transparente fixe destinée à supporter l'objet à mesurer, ledit objet étant exposé à des rayons lumineux émis par une source de lumière disposée en dessous de ladite table, et
au moins une caméra vidéo disposée verticalement au-dessus de la table, ladite caméra vidéo et ladite source de lumière étant mobiles par rapport à ladite table,
est caractérisé en ce qu'il comporte
des moyens pour comparer la forme de l'objet avec des images mémorisées dans un ordinateur et pour choisir l'image mémorisée ayant la même forme que l'objet,
un palpeur pour examiner le contour de l'objet, le déplacement de ce palpeur étant commandé par l'image de l'objet mémorisée dans l'ordinateur lié audit palpeur,
des moyens de calcul pour orienter les axes principaux de cette image mémorisée et les faire correspondre avec les axes principaux de l'objet sur la table fixe, et
des moyens pour déterminer les différences entre l'image mémorisée et l'image formée de l'objet à mesurer.

Dans la forme de réalisation préférée, ladite caméra vidéo a un grand champ de vision et ledit palpeur est une autre caméra vidéo ayant un petit champ de vision pour permettre une mesure avec une grande résolution, les deux caméras vidéo étant pourvues chacune d'un objectif et d'une grille de résolution électronique.

De préférence, l'axe des rayons lumineux émis la source de lumière est vertical et aligné avec l'axe optique de la caméra.

Dans une variante de réalisation, la source de lumière est montée obliquement, et l'ensemble comporte un miroir pour que l'axe des rayons lumineux émis soit vertical par rapport au plan de la table.

La présente invention sera mieux comprise en référence aux dessins annexés qui représentent, à titre d'exemple, l'ensemble selon l'invention, dans lesquels :
La figure 1 une vue de l'ensemble selon l'invention montrant seulement les parties caractéristiques,
La figure 2 une vue de dessus du pont portant deux caméras,
La figure 3 est la même vue que la figure 2 mais avec une caméra et deux objectifs, et
La figure 4 une vue partielle de l'ensemble montrant une autre position de la source de lumière.

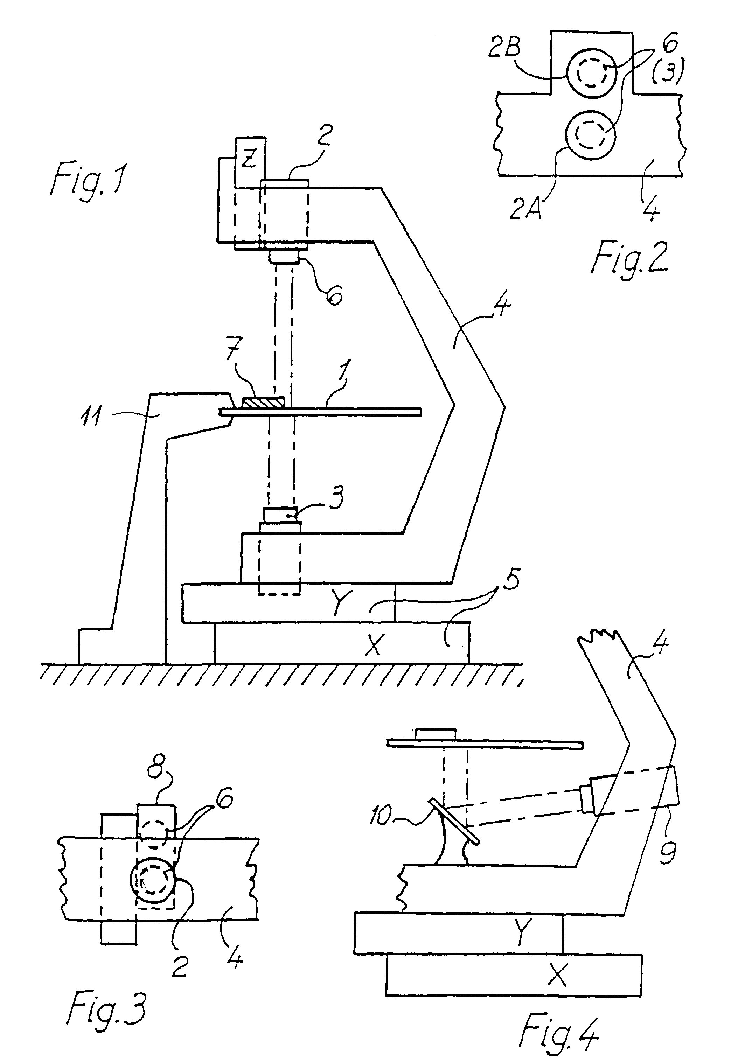

La figure 1 illustre l'ensemble selon l'invention qui comprend un support transparent 1 fixé sur un bras porteur 11 et portant un objet à mesurer 7. Une caméra vidéo 2 et une source de lumière 3 sont fixées sur un pont 4. La caméra 2 est placée verticalement au-dessus du support 1 et la source de lumière 3 est placée sous ledit support, l'axe optique de la caméra étant aligné avec l'axe des rayons lumineux émis par la source 3. Naturellement, les positions de la caméra 2 et de la source 3 sont interchangeables. Le pont 4 peut se déplacer au moyen de deux coulisses 5 mobiles selon deux directions X et Y dont les axes de commande ne sont pas représentés. Ainsi la caméra 2 qui est pourvue d'un objectif 6 et d'une grille à résolution électronique CCD avec un champ de vision très étroit peut se déplacer librement au-dessus et en dessous du support 1 où se trouvent un ou plusieurs objets à mesurer 7, ces objets pouvant être posés sur le support d'une façon non déterminée.

Afin de faciliter l'interprétation des mesures, le pont 4 peut être pourvu de deux caméras 2A et 2B, comme illustré par la figure 2. La première caméra 2A dispose d'un grand champ de vision permettant de mémoriser électroniquement la position du ou des objets à mesurer, ainsi que leur position angulaire. La deuxième caméra 2B dispose d'un petit champ de vision optique et peut être dirigée automatiquement sur un objet après l'autre et procéder à toutes les analyses de mesures nécessaires.

Dans la variante de réalisation illustrée par la figure 3, la caméra 2 est unique, mais elle est équipée de deux objectifs 6 dont l'un possède un grand champ de vision et l'autre un petit champ de vision, ces objectifs étant montés sur une coulisse transversale 8 montée sur ledit pont 4. Ainsi les différents champs de vision peuvent être utilisés selon le besoin de la mesure.

La figure 4 illustre un autre arrangement dans lequel la source lumineuse 9 est montée horizontalement ou de façon oblique, mais à coté de l'axe optique de la ou des caméras. Pour que l'axe des rayons lumineux émis par la source 9 soit vertical et corresponde avec l'axe optique de la caméra, on utilise un miroir 10.

Le problème de l'aberration chromatique de l'objectif peut être éliminé en filtrant la lumière venant de la source afin qu'il ne reste qu'une bande très étroite, c'est-à-dire qu'on obtienne une lumière presque monochrome. La fréquence centrale sélectionnée doit naturellement être choisie d'après les caractéristiques des lentilles. En principe le spectre de la lumière doit être choisi autour d'une fréquence à laquelle la lentille présente un maximum d'aberration chromatique. De plus, la lentille possède un filtre avec les mêmes caractéristiques optiques que la source de lumière.

Les raisons aboutissant au choix de la fréquence prédéterminée sont les suivantes.

Il n'est pas important de réduire la valeur absolue de l'aberration chromatique, mais il faut absolument qu'elle reste la plus constante possible à travers toute la bande de spectre utilisée. Cette condition est la plus approchée à une fréquence se situant autour de la fréquence à laquelle la lentille a le maximum d'aberration et à laquelle la première dérivation de la courbe décrivant cette faute est proche de zéro. L'aberration résiduelle peut facilement être réduite par le calibrage du système, ce qui garantit que l'erreur est minimalisée sur tout le spectre de la source de lumière utilisée.

Un autre problème se pose si l'appareil utilisé comporte une partie mobile pour explorer des parties différentes de l'objet à mesurer, cette partie mobile pouvant induire des vibrations. Ce problème est encore plus important si l'on utilise un système optique ayant un grand rapport d'amplification pour avoir une meilleure sélection.

Le problème réside dans le fait que les plus grandes vibrations induites arrivent en accélérations et décélérations. La notion d'accélération et de décélération provient de ce que les sources de lumière émettent constamment dans l'ensemble et que, par conséquent, les caméras intègrent constamment. De ce fait il est nécessaire d'arrêter la caméra quand elle arrive à la position correcte pour capturer une image nette.

Pour éviter ces problèmes, l'invention propose un mouvement constant de la caméra avec l'utilisation d'une lumière pulsée. Avec cette combinaison, les désavantages dus aux accélérations sont éliminés.

Quant à l'appareil en soi il est normal de lui "dire" quelle sorte d'objets il doit mesurer. Cela est fait au moyen d'un code unique d'identification de l'objet. L'appareil peut ainsi appeler le programme mémorisé relatif à cet objet. Mais ce système présente deux désavantages: Premièrement, on a besoin d'une intervention manuelle, ce qui entraîne un ralentissement du processus de mesure. Deuxièmement, il est nécessaire, pour différents objets ayant la même forme, de les placer au même endroit et dans la même direction, car l'appareil est normalement programmé avec des cordonnées absolues et non avec des coordonnées liées à la pièce, et les éléments de fixation pour tenir l'objet en place provoquent un autre ralentissement de la procédure.

L'ensemble fourni par l'invention permet de remédier à ces problèmes en offrant un programme d'ordinateur lié aux objets à mesurer et un système de coordonnées correspondant aux objets. Ainsi l'opérateur ou un manipulateur met l'objet sur le support 1 sans se soucier de son orientation. La caméra à grand champ de vision prend une image électronique de l'objet, l'ordinateur choisit le programme relatif à cet objet et calcule la position et la direction. L'ordinateur appelle le programme de mesure pour cet objet et calcule automatiquement les coordonnées correspondant à la place et la direction de l'objet.

Après avoir reconnu l'objet, sa position et sa direction, l'ordinateur donne le départ pour la mesure. Il donne à la source de lumière des impulsions à des places relatives à la mesure quand la caméra suit le trajet programmé et recalcule la position relative et la direction de l'objet.

Par ce procédé il est possible de bien reconnaître plusieurs formes d'objets. De plus, il n'est pas nécessaire de mesurer une sorte d'objets après une autre sorte, et les objets peuvent arriver comme les automates les présentent. En outre, les mesures peuvent se suivre à grande vitesse, parce qu'il y n'a pas de main-d'oeuvre qui pourrait ralentir le processus de mesure.

## Revendications

1. Procédé pour mesurer les dimensions d'un objet, dans lequel
a) on pose l'objet (7) sur une table de mesure fixe (1),
b) on expose l'objet (7) à des rayons lumineux,
c) on reconnaît la forme de l'objet (7) en formant une image électronique dudit objet avec une caméra vidéo (2A) pour comparer sa forme avec des images mémorisées dans un ordinateur,
d) on choisit l'image mémorisée ayant la même forme que l'objet (7),
e) on détermine les axes principaux de l'objet (7) pour déterminer les coordonnées liées à la place où se trouve l'objet et à la direction de ses axes principaux,
f) on examine le contour de l'objet (7) au moyen d'un palpeur (2B) dont le parcours est commandé par l'image mémorisée, les axes principaux de cette image étant orientés pour correspondre avec les axes de l'objet (7) sur la table fixe (1), et
g) on détermine les différences entre l'image mémorisée et l'image composée à l'aide des points capturés par le palpeur.

2. Procédé selon la revendication 1, dans lequel l'on utilise une deuxième caméra vidéo (2B) pour examiner le contour de l'objet (7).

3. Procédé selon la revendication 2, dans lequel la deuxième caméra vidéo (2B) suit constamment le contour de l'objet (7) à mesurer.

4. Procédé selon la revendication 2, dans lequel la deuxième caméra vidéo est commandée par des points marqués dans l'image mémorisée.

5. Procédé selon la revendication 4, dans lequel la source de lumière (3) n'est enclenchée qu'à ces points marqués pour n'émettre que des éclairs de courte durée.

6. Procédé selon la revendication 1, dans lequel la source de lumière (3) émet un faisceau lumineux monochrome.

7. Ensemble de mesure pour la mise en oeuvre du procédé selon la revendication 1, comprenant
une table de mesure transparente et fixe (1) destinée à supporter l'objet (7) à mesurer, ledit objet (7) étant exposé à des rayons lumineux émis par une source de lumière (3) disposée en dessous de ladite table (1),
et au moins une caméra vidéo (2A) disposée verticalement au-dessus de la table (1), ladite caméra vidéo (2A) et ladite source de lumière (3) étant mobiles par rapport à ladite table (1),
caractérisé en ce qu'il comporte
des moyens pour comparer la forme de l'objet (7) avec des images mémorisées dans un ordinateur et pour choisir l'image mémorisée ayant la même forme que l'objet (7),
un palpeur (2B) pour examiner le contour de l'objet (7), le déplacement de ce palpeur (2B) étant commandé par l'image de l'objet mémorisée dans l'ordinateur lié audit palpeur (2B),
des moyens de calcul pour orienter les axes principaux de cette image mémorisée et les faire correspondre avec les axes principaux de l'objet (7) sur la table fixe (1), et
des moyens pour déterminer les différences entre l'image mémorisée et l'image formée de l'objet à mesurer (7).

8. Ensemble selon la revendication 7, caractérisé en ce que ladite caméra vidéo (2A) a un grand champ de vision et en ce que ledit palpeur est une autre caméra vidéo (2B) ayant un petit champ de vision pour permettre une mesure avec une grande résolution, les deux caméras vidéo (2A,2B) étant pourvues chacune d'un objectif (6) et d'une grille de résolution électronique.

9. Ensemble selon la revendication 7, dans lequel l'axe des rayons lumineux émis la source de lumière (3) est vertical et aligné avec l'axe optique de la caméra vidéo (2A).

10. Ensemble selon la revendication 7, caractérisé en ce que la source de lumière (9) est montée obliquement, et en ce qu'il comporte un miroir (10) pour que l'axe des rayons lumineux émis soit vertical par rapport au plan de la table (1).

## Patentansprüche

1. Verfahren zur Messung der Dimensionen eines Objekts, wobei
a) das Objekt (7) auf einen feststehenden Meßtisch (1) gelegt wird,
b) das Objekt (7) Lichtstrahlen ausgesetzt wird,
c) die Form des Objekts (7) durch die Bildung eines elektronischen Bildes des besagten Objekts mit einer Videokamera (2A) erkannt wird, um seine Form mit in einem Computer gespeicherten Bildern zu vergleichen,
d) das gespeicherte Bild ausgewählt wird, das dieselbe Form wie das Objekt (7) aufweist,
e) die Hauptachsen des Objekts (7) für die Bestimmung der Koordinaten bestimmt werden, die mit dem Ort verbunden sind, an dem sich das Objekt befindet, sowie mit der Richtung seiner Hauptachsen,
f) die Kontur des Objekts (7) mittels eines Tastsensors (2B) geprüft wird, dessen Wegstrecke durch das gespeicherte Bild gesteuert wird, wobei die Hauptachsen dieses Bildes so ausgerichtet sind, daß sie mit den Achsen des Objekts (7) auf dem feststehenden Tisch (1) übereinstimmen, und
g) die Unterschiede zwischen dem gespeicherten Bild und dem mit Hilfe der durch den Tastsensor aufgenommenen Punkte zusammengesetzten Bild bestimmt werden.

2. Verfahren nach Patentanspruch 1, bei dem eine zweite Videokamera (2B) für die Prüfung der Kontur des Objekts (7) verwendet wird.

3. Verfahren nach Patentanspruch 2, bei dem die zweite Videokamera (2B) konstant der Kontur des zu messenden Objekts (7) folgt.

4. Verfahren nach Patentanspruch 2, bei dem die zweite Videokamera durch Markierungspunkte im gespeicherten Bild gesteuert wird.

5. Verfahren nach Patentanspruch 4, bei dem die Lichtquelle (3) nur an diesen Markierungspunkten aktiviert wird, damit sie nur Blitze von kurzer Dauer aussendet.

6. Verfahren nach Patentanspruch 1, bei dem die Lichtquelle (3) ein einfarbiges Lichtbündel aussendet.

7. Meßeinheit zur Durchführung des Verfahrens nach Patentanspruch 1, die folgendes umfaßt:
einen durchsichtigen und feststehenden Meßtisch (1), der für die Auflage eines zu messenden Objekts (7) bestimmt ist, wobei das besagte Objekt (7) Lichtstrahlen ausgesetzt ist, die von einer unter dem besagten Tisch (1) angeordneten Lichtquelle (3) ausgesendet werden,
und mindestens eine, vertikal über dem Tisch (1) angeordnete Videokamera (2A), wobei die besagte Videokamera (2A) und die besagte Lichtquelle (3) in bezug auf den besagten Tisch (1) bewegbar sind,
**dadurch gekennzeichnet**, daß
sie Mittel zum Vergleichen der Form des Objekts (7) mit den in einem Computer gespeicherten Bildern, und zur Auswahl des gespeicherten Bildes enthält, das dieselbe Form wie das Objekt (7) aufweist,
daß sie einen Tastsensor (2B) aufweist, um die Kontur des Objekts (7) zu überprüfen, wobei die Lageveränderung dieses Tastsensors (2B) durch das im Computer des besagten Tastsensors (2B) gespeicherte Bild des Objekts gesteuert wird,
daß sie Berechnungsmittel enthält, um die Hauptachsen dieses gespeicherten Bildes auszurichten, damit sie den Hauptachsen des Objekts (7) auf dem feststehenden Tisch (1) entsprechen, und
daß sie Mittel zur Bestimmung der Unterschiede zwischen dem gespeicherten Bild und dem vom zu messenden Objekt (7) gebildeten Bild aufweist.

8. Einheit nach Patentanspruch 7,
**dadurch gekennzeichnet**, daß
die besagte Videokamera (2A) ein großes Sichtfeld aufweist, und daß es sich bei dem besagten Tastsensor um eine weitere Videokamera (2B) handelt, die ein kleines Sichtfeld aufweist, um eine Messung mit einer hohen Auflösung zu ermöglichen, wobei die zwei Videokameras (2A,2B) jeweils mit einem Objektiv (6) und einem elektronischen Auflösungsgitter ausgestattet sind.

9. Einheit nach Patentanspruch 7, bei dem die Achse der von der Lichtquelle (3) ausgesendeten Lichtstrahlen vertikal und mit der optischen Achse der Videokamera (2A) gefluchtet ist.

10. Einheit nach Patentanspruch 7,
**dadurch gekennzeichnet**, daß
die Lichtquelle (9) schräg angebracht ist, und daß sie einen Spiegel (10) aufweist, damit die Achse der ausgesendeten Lichtstrahlen gegenüber der Ebene des Tisches (1) vertikal ist.

## Claims

1. Method to measure the dimensions of an object, wherein :
a) the object (7) is put on a stationary measurement table (1),
b) the object (7) is exposed to light rays,
c) the shape of the object (7) is recognised by forming an electronic image of said object by means of a video camera (2A) so that to compare its shape with other images stored into a computer,
d) the stored image having the same shape that the object (7) is chosen,
e) the main axes of the object (7) are determined so as to determine the coordinates system related to the position of the object and to the direction of its main axes,
f) the outline of the object (7) is examined by means of a probe (2B) whose displacement is driven by the stored image, the main axes of this image being directed so that to correspond with the axes of the object (7) on the stationary table (1), and
g) the differences between the stored image and the image made of the points detected by the probe are then determined.

2. Method according to claim 1, wherein a second video camera (2B) is used to examine the outline of the object (7).

3. Method according to claim 2, wherein the second video camera (2B) follows the outline of the object (7) to be measured without stopping.

4. Method according to claim 2, wherein the second video camera is driven according to some points marked in the stored image.

5. Method according to claim 4, wherein the light source (3) is driven at these marked points only, to give short-duration light pulses.

6. Method according to claim 1, wherein the light source (3) gives a monochromatic light beam.

7. Measurement assembly to make use of the method according to claim 1, comprising
a measurement table (1) transparent and stationary for supporting the object (7) to be measured, the said objet (7) being exposed to light rays given by a light source (3) placed under the said table (1),
and at least a video camera (2A) vertically placed over the table (1), the said video camera (2A) and the said light source (3) being movable with regard to the said table (1),
characterized in that it comprises
means for comparing the shape of the object (7) with images stored in a computer, and for choosing the stored image having the same shape as this of the objet (7),
a probe (2B) for examining the outline of the objet (7), the displacement of this probe (2B) being driven by the image of the object which is stored in the computer connected to said probe (2B),
calculating means for directing the main axes of this stored image so that to correspond with the main axes of the object (7) on the stationary table (1), and means for determining the differences between the stored image and the formed image of the object (7) to be measured.

8. Assembly according to claim 7, characterized in that the said video camera (2A) has a large field of view and in that the said probe consists in another video camera (2B) having a narrow field of view to allow high resolution measurements, the two cameras (2A, 2B) being provided with a lens (6) and with a CCD sensor.

9. Assembly according to claim 7, wherein the axis of the light rays emitted by the light source (3) is vertical and aligned with the optical axis of the video camera (2A).

10. Assembly according to claim 7, characterized in that the light source (9) is mounted in an oblique position, and in that it is equipped with a mirror (10) to have the axis of the emitted light rays vertical with regard to the plane of the table (1).
